# EUROPÄISCHE PATENTANMELDUNG

(11) **EP 2 026 049 A1**
(43) Veröffentlichungstag der Anmeldung: **18.02.2009**
(21) Anmeldenummer: 07114453.9
(22) Anmeldetag: 16.08.2007
(51) Int. Cl.: G01J 3/02, G01J 5/06

(54) **Verfahren zur Reduktion der thermalen Hintergrundstrahlung von Spektralapparaten und Detektoranordnung zum Einsatz im Infrarotbereich**

(71) Anmelder: Universität Bremen, 28359 Bremen (DE)
(72) Erfinder: Gerilowski, Dipl.-Phys. Konstantin, 27751, Delmenhorst (DE)
(74) Vertreter: Tappe, Udo

(57) **Zusammenfassung**

Bei einem Verfahren zum Darstellen eines Spektrums mit einer Detektoranordnung (10) zum Detektieren von Infrarotstrahlung, wobei in einem evakuierten Bereich (17) eine Apertur (22) angeordnet wird, ein gekühlter Detektor (16) innerhalb des evakuierten Bereichs (17) der Apertur (22) zugewandt angeordnet wird, eine Detektorwärmeabschirmung (20) mit begrenzender Apertur gekühlt wird, ein Filtermittel (21) innerhalb des evakuierten Bereichs (17) angeordnet wird und vom Detektor (16) abgewandt vor der Apertur (22) ein dispersives optisches System (11) zum Erzeugen eines Spektrums angeordnet wird, wird zur Verminderung des Anteils der thermalen Hintergrundstrahlung am Detektorsignal das Filtermittel (21) auf die Temperatur des Detektors (16) gekühlt und der Detektor (16) mittels des gekühlten Filtermittels (21) vor unerwünschter Hintergrundstrahlung abgeschirmt.

## Beschreibung

Die Erfindung betrifft ein Verfahren zum Darstellen eines Spektrums mit einer Detektoranordnung zum Detektieren von Infrarotstrahlung, wobei in einem evakuierten Bereich eine Apertur angeordnet wird, ein gekühlter Detektor innerhalb des evakuierten Bereichs der Apertur zugewandt angeordnet wird, eine Detektorwärmeabschirmung gekühlt wird, ein Filtermittel innerhalb des evakuierten Bereichs angeordnet wird und vom Detektor abgewandt vor der Apertur ein dispersives oder beugendes optisches System zum Erzeugen eines Spektrums angeordnet wird. Ferner betrifft die Erfindung eine Detektoranordnung zum Einsatz im Infrarotbereich mit einem evakuierten Bereich, einer Apertur, einem innerhalb des evakuierten Bereichs angeordneten und der Apertur zugewandten gekühlten Detektor, einer gekühlten Detektorwärmeabschirmung, einem innerhalb des evakuierten Bereichs angeordneten Filtermittel, einem vom Detektor abgewandt vor der Apertur angeordneten dispersiven oder beugenden optischen System zum Erzeugen eines Spektrums.

Zur Reduzierung des thermischen Eigenrauschens der Detektoren werden diese gekühlt, da das Detektorrauschen eine starke Temperaturabhängigkeit aufweist. Hierzu wird der Detektor in einem evakuierten Bereich angeordnet, um Kondensation an den Detektorflächen zu vermeiden. Durch Kondensation von Feuchtigkeit könnte die Funktionalität beeinträchtigt werden, welches bis zur völligen Unbrauchbarkeit führen kann. Ferner wird der Detektor zur Reduzierung des durch externe thermale Einstrahlung verursachten Dunkelstromes in einer gekühlten Detektorwärmeabschirmung angeordnet. Dies schränkt den Blickwinkel des Detektors auf einen definierten Raumwinkelbereich ein. Nachteilig ist, dass zur Reduzierung dieses Dunkelstromes das gesamte optische System, welches auch als optische Bank bezeichnet wird, gekühlt werden muss. Zur Vermeidung von Kondensation muss somit das gesamte Instrument mit Trockenluft umspült werden, was sehr aufwendig und kostenintensiv ist. So müssen entsprechend dimensionierte Kühlvorrichtungen und Versorgungseinrichtungen vorgesehen werden. Des Weiteren ergeben sich hierdurch erhebliche Entwicklungs- und Betriebskosten.

Aus der DE 694 22 874 ist eine Detektoranordnung bekannt, bei der ein üblicher Bandpassfilter verwendet wird. Dieser Bandpassfilter dient dazu die Strahlung zu eliminieren, die im Infrarotbereich weniger wegen des davon abgedeckten Wellenlängenbereichs als vielmehr wegen des Beitrags zur störenden thermischen Hintergrundstrahlung zum Signal beiträgt. Dabei ist nachteilig, dass immer die gesamte Hintergrundstrahlung sämtlicher Wellenlängen, die weiterhin durch den Bandpass durchgelassen werden, zum Detektorergebnis für einen Wellenlängenausschnitt innerhalb des Bandpasses beitragen. Hierdurch besteht die Gefahr, dass ein erheblicher Anteil des detektierten Signals durch die Hintergrundstrahlung überlagert und somit verfälscht wird.

Daher liegt der Erfindung das Problem zu Grunde, ein Verfahren sowie eine Detektoranordnung der vorgenannten Art derart weiter zu entwickeln, dass der Anteil der Hintergrundstrahlung am Detektorsignal vermindert wird.

Das Problem wird mittels eines Verfahrens der eingangs genannten Art dadurch gelöst, dass das Filtermittel auf die Temperatur des Detektors gekühlt wird und dass mittels des gekühlten Filtermittels der Detektor vor unerwünschter thermaler Hintergrundstrahlung abgeschirmt wird. Ferner wird das Problem mittels einer Detektoranordnung der eingangs genannten Art dadurch gelöst, dass das Filtermittel auf die Temperatur des Detektors gekühlt ist und dass das Filtermittel ein Verlaufsfilter und/oder ein Stufenfilter mit abhängig von der geometrischen Position auf dem Filter beim Verlaufsfilter kontinuierlich und beim Stufenfilter stufenweise variierenden Filtereigenschaften ist.

Hierbei ist von Vorteil, dass der Detektor als erste optische Fläche die Oberfläche des gekühlten Filtermittels sieht. Da das Filtermittel auf die gleiche Temperatur wie der Detektor gekühlt wird, emittiert das Filtermittel keine für den Detektor nennenswert registrierbare Wärmestrahlung. Zugleich wird die von Außen einwirkende Wärmstrahlung gefiltert und es wird nur der durch das Filtermittel bestimmte schmalbandige Wellenlängenbereich durchgelassen. Ferner ist von Vorteil, dass das Filtermittel abhängig von der Wellenlänge die unerwünschte thermale Hintergrundstrahlung im übrigen Wellenlängenbereich innerhalb des vom Filtermittel durchgelassenen schmalbandigen Wellenlängenbereiches vermindert. Das Filtermittel dient somit weniger zur Bestimmung der Messgröße als vielmehr zum Zwecke der Verminderung und Abschirmung des Detektors vor weiterhin unerwünschter thermaler Hintergrundstrahlung, ohne das Signal selbst auszublenden oder zu schwächen. Die Messgröße bzw. der schmalbandige zu registrierende Wellenlängenbereich wird bereits durch das vorgeschaltete optische System bestimmt.

Nach einer Weiterbildung des Verfahrens wird als optisches System ein nicht abbildendes optisches System oder vorzugsweise ein abbildendes optisches System verwendet. Somit besteht die Möglichkeit entweder einzelne Spektren zu detektieren und/oder flächenhafte spektrale Bilder zu erzeugen.

Vorteilhafterweise wird das optische System nicht oder nur geringfügig gekühlt. Da das Filtermittel auf die gleiche Temperatur gekühlt ist wie der Detektor, emittiert das Filtermittel keine für den Detektor nennenswert registrierbare Wärmestrahlung während zugleich die von Außen einwirkende Wärmstrahlung gefiltert wird. Daher kann auf eine aufwändige Kühlung des optischen Systems verzichtet werden. Somit muss auch dieser Teil der gesamten Detektoranordnung nicht evakuiert oder mit Trockenluft umspült werden, um Kondensation zu vermeiden. Hierdurch kann der Entwicklungs-, Herstellungs- und Betriebsaufwand sowie die damit verbundenen Kosten deutlich reduziert werden.

Nach einer Ausführungsform kann als gekühltes Filtermittel ein Verlaufsfilter und/oder ein Stufenfilter eingesetzt werden, wobei Filtereigenschaften in Abhängigkeit von der geometrischen Position auf dem Filter beim Verlaufsfilter kontinuierlich und beim Stufenfilter stufenweise in Spektralrichtung verändert werden. Hierbei ist von Vorteil, dass sich die Filtereigenschaften über die räumliche Ausdehnung des Filtermittels verändern. Je nach Wellenlänge und abhängig von der Stelle des Filtermittels, auf die das Licht trifft, wird die jeweilige Wellenlänge ungehindert durchgelassen. Der Anteil des Lichtes mit einer außerhalb des Filterbereiches liegenden Wellenlänge sowie die dazugehörige Hintergrundstrahlung wird jedoch deutlich vermindert. Somit kann der Anteil der störenden Infrarotstrahlung je nach Wellenlänge um einen Faktor von etwa 10 bis 20 reduziert werden. Das Signal-zu-Rauschverhältnis wird deutlich erhöht.

Entsprechend einer Weiterbildung kann als Verlaufsfilter oder Stufenfilter ein Bandpassfilter oder ein Kantenfilter verwendet werden. Die Herstellung von Bandpassfiltern oder Kantenfiltern ist ebenso wie deren Verwendung als ein Verlaufsfilter oder Stufenfilter grundsätzlich bekannt. Aufgrund der fortschreitenden Entwicklung können entsprechende Filtermittel mit einer hinreichenden Qualität auch im Bereich des nahen Infrarots eingesetzt werden. Vorzugsweise wird der Bandpassfilter als ein Interferenzfilter oder ein dichroischer Filter ausgeführt oder aus einem Hochpassfilter und einem Tiefpassfilter hergestellt, wie es grundsätzlich seit langem bekannt und bewährt ist.

Nach einer weiteren Ausführungsform wird der evakuierte Bereich durch ein Vakuumgefäß begrenzt. Hierdurch ist es möglich, dass Verfahren auch in einer nicht evakuierten Umgebung einzusetzen, wobei gleichzeitig und auf zuverlässige Weise die Kondensation verhindert wird. Zudem ist das Verfahren somit auch mobil einsetzbar. Vorzugsweise wird in einer Wand des Vakuumgefäßes ein Fenster angeordnet und das optische System wird vom Detektor abgewandt vor dem Fenster angeordnet. Hierdurch kann das Vakuumgefäß und der evakuierte Bereich auf ein minimales Ausmaß begrenzt werden. Die zur Herstellung des Vakuums notwendigen Vorrichtungen können ebenfalls auf ein minimal notwendiges Maß hinsichtlich der Baugröße und der zu erbringenden Leistung reduziert werden. Dies vermindert die Herstellungs- und Betriebskosten und vereinfacht die Mobilität. Zudem ist das optische System leichter für Wartungs- oder Reparaturarbeiten zugänglich.

Als Detektor kann ein Mehrkanal-Zeilen-Detektor oder ein 2-Dimensionaler-Mehrkanal-Detektor verwendet werden. Derartige Detektoren sind auch in einer evakuierten Umgebung und unter der Einwirkung einer erheblichen Kühlung zuverlässig und langlebig einsetzbar.

Entsprechend einer Weiterbildung kann als optisches System ein Spektrometer, insbesondere ein Prismenspektrometer oder ein Gitterspektrometer, oder ein hyperspektraler Imager oder Pushbroom-/Whiskbroom-Spektrometer verwendet werden. So werden Prismen- und Gitterspektrometer bereits seit Jahren erfolgreich beispielsweise in der Fernerkundung eingesetzt, so dass die bisherigen Erfahrungen genutzt werden können. Mittels eines hyperspektralen Imagers können Bilder in mehreren Wellenlängen gleichzeitig aufgenommen werden.

Vorzugsweise wird die Detektoranordnung im Bereich des nahen Infrarot (SWIR:
short wavelength infrared), insbesondere für Detektorempfindlichkeiten größer 1,6 µm, eingesetzt. Eine derartige Detektoranordnung kann beispielsweise zur Messung des atmosphärischen Methangehaltes genutzt werden und liefert hierfür sehr gute Ergebnisse, die durch ein sehr hohes Signal-zu-Rauschverhältnis geprägt sind.

Von besonderem Vorteil ist die Verwendung des erfindungsgemäßen Verfahrens in einem, insbesondere abbildenden, Spektrometer oder einem, insbesondere abbildenden, hyperspektralen Imager oder Pushbroom-/Wiskbroom-Spektrometer.

Darüber hinaus weist die erfindungsgemäße Detektoranordnung vorzugsweise ein Filtermittel auf, das auf ein Substrat oder auf eine innerhalb des Vakuumgefäßes vorgesehene Linse oder direkt auf den Detektor aufgebracht, insbesondere aufgedampft, ist. Durch das Aufbringen auf ein Substrat kann das Filtermittel kostengünstig ausgetauscht werden. Beim Aufbringen direkt auf den Detektor kann die Anzahl der notwendigen Bauelemente reduziert werden, was den Montageaufwand reduziert sowie Abbildungsfehler und Streulicht vermindert.

Nach einer Weiterbildung der Detektoranordnung ist das Filtermittel zum Kühlen mit der Detektorwärmeabschirmung verbunden oder es ist eine separate Kühlung für das Filtermittel vorgesehen. Durch die direkte Verbindung mit der gekühlten Detektorwärmeabschirmung ist für das Filtermittel keine separate Kühlung notwendig, wodurch der Aufwand zur Kühlung reduziert werden kann. Andererseits ist es durch eine separate Kühlung des Filtermittels möglich, das Filtermittel an einer anderen von der Detektorwärmeabschirmung unabhängigen und im Einzelfall möglicherweise günstigeren Stelle vorzusehen. Zudem ist eine ausreichende Kühlleistung gewährleistet.

Entsprechend einer weiteren Ausführungsform ist die Apertur am Fenster angeordnet. Hierdurch ist eine einfache Montage der Apertur gewährleistet. Ferner wird der Raumwinkelbereich, aus dem Licht in das Vakuumgefäß eintreten kann, eindeutig definiert. Vorzugsweise ist eine weitere Apertur innerhalb des evakuierten Bereiches angeordnet, wobei diese weitere Apertur auf die Temperatur des Detektors gekühlt ist. Hierdurch kann der zu betrachtende Raumwinkelbereich kurz vor dem Detektor eindeutig festgelegt werden, wodurch Störeinflüsse beispielsweise durch Reflektionen an der Innenwand des Vakuumgefäßes deutlich reduziert werden. Durch die Kühlung auf die Temperatur des Detektors geht von dieser Apertur selbst keine störende Wärmeabstrahlung aus.

Nach einer Weiterbildung ist die weitere Apertur zum Kühlen mit der Detektorwärmeabschirmung verbunden oder es ist eine separate Kühlung für die weitere Apertur vorgesehen. Je nach Bedarf und Einsatzzweck kann somit entweder auf eine eigene Kühlung der Apertur verzichtet werden oder die Anordnung der Apertur innerhalb des evakuierten Bereiches kann aufgrund einer eigenen Kühlung unabhängig von der Lage der Detektorwärmeabschirmung erfolgen.

Vorzugsweise ist die Detektoranordnung als ein abbildendes Spektrometer oder als ein, insbesondere abbildender, hyperspektraler Imager ausgebildet. Hierdurch können flächige Bilder im nahen Infrarot mittels eines Spektrometers oder eines hyperspektralen Imagers angefertigt werden.

Nachfolgend werden Ausführungsbeispiele, anhand der nachfolgenden Zeichnungen näher erläutert. Es zeigen:
- Fig. 1: eine schematische Draufsicht auf einen erfindungsgemäße Detektoranordnung,
- Fig. 2: einen Ausschnitt der Detektoranordnung gemäß Fig. 1,
- Fig. 3: eine zweite Ausführungsform in einer Schnittdarstellung ähnlich Fig. 2,
- Fig. 4: eine dritte Ausführungsform in einer Darstellung ähnlich Fig. 2 und
- Fig. 5: eine weitere Ausführungsform in einer Schnittdarstellung ähnlich Fig. 2.

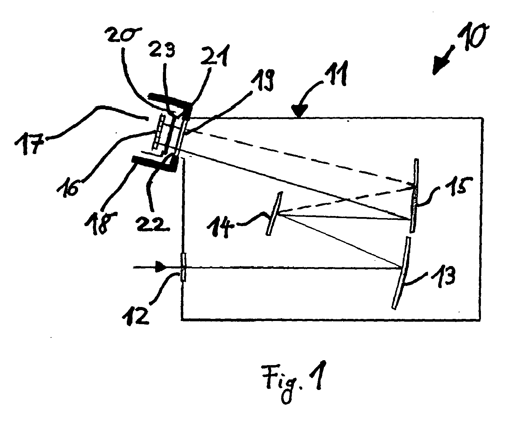

Fig. 1 zeigt eine erfindungsgemäße Detektoranordnung 10. Die Detektoranordnung 10 weist ein optisches System 11 auf. Das optische System 11 besteht bei diesem Ausführungsbeispiel aus einem Eingangsschlitz 12, durch den das Licht in das optische System 11 und damit in die Detektoranordnung 10 eintritt. Ferner weist das optische System 11 einen ersten Kollimator 13, ein Beugungsgitter 14 und einen fokussierenden Spiegel 15 auf.

Mittels des fokussierenden Spiegels 15 werden die Lichtstrahlen auf einen Detektor 16 gelenkt. Der Detektor 16 befindet sich innerhalb eines evakuierten Bereiches 17. Der evakuierte Bereich 17 wird von den Wänden eines Vakuumgefäßes 18 begrenzt. In der Wand des Vakuumgefäßes 18, die dem fokussierenden Spiegel 15 zugewandt ist, ist ein Fenster 19 angeordnet. Durch das Fenster 19 kann das Licht über den Spiegel 15 in das Vakuumgefäß 18 eindringen und damit letztlich auf den Detektor 16 auftreffen.

Der Detektor 16 ist innerhalb einer Detektorwärmeabschirmung 20 angeordnet. Sowohl der Detektor 16 als auch die Detektorwärmeabschirmung 20 werden über nicht näher dargestellte Mittel auf die gleiche Temperatur gekühlt. Die Detektorwärmeabschirmung 20 weist zwischen dem Detektor 16 und dem Fenster 19 eine Öffnung auf, auf der ein Filtermittel 21 angeordnet ist.

Am Übergang zwischen dem Fenster 19 und der Wand des Vakuumgefäßes 18 ist dem Detektor 16 zugewandt eine Apertur 22 angeordnet.

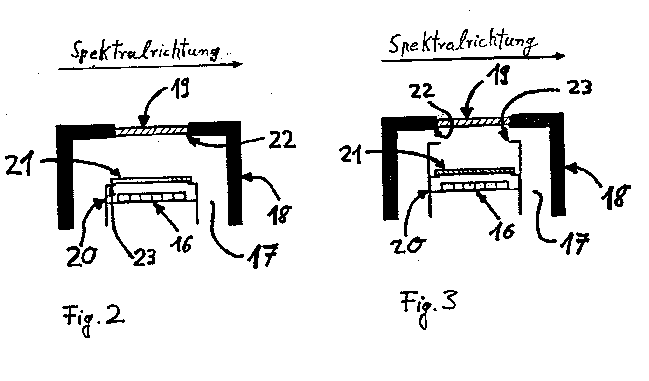

Fig. 2 zeigt einen Ausschnitt der Detektoranordnung 10 gemäß der Fig.1 mit dem Vakuumgefäß 18 und seinen Bestandteilen. Hierbei wird noch einmal deutlich, dass das Filtermittel 21 vor der Öffnung der Detektorwärmeabschirmung 20 angeordnet ist. Da das Filtermittel 21 direkt mit der gekühlten Detektorwärmeabschirmung verbunden ist, wird somit das Filtermittel ebenfalls annähernd auf die gleiche Temperatur wie der Detektor 16 und die Detektorwärmeabschirmung 20 gekühlt. Das Filtermittel 21 kann - wie in diesem Fall - auf ein Substrat oder alternativ auf eines der letzten optischen Elemente, wie z.B. der Vorder- oder Rückseite einer Linse, aufgedampft werden. Eine weitere Apertur 23 ist zwischen dem Filtermittel 21 und dem Detektor 16 angeordnet. Durch die konstruktive Verbindung mit der gekühlten Detektorwärmeabschirmung 20 wird auch die weitere Apertur 23 auf die gleiche Temperatur wie der Detektor 16 gekühlt. Bei dem gezeigten Ausführungsbeispiel ist die Apertur 23 die begrenzende Apertur.

Fig. 3 zeigt einen Ausschnitt einer Detektoranordnung ähnlich der in Fig. 2, jedoch ist hier die weitere Apertur 23 in Verlängerung der Detektorwärmeabschirmung 20 vor dem Filtermittel 21 angeordnet. Auch hier wird die weitere Apertur 23 durch die konstruktive Verbindung mit der gekühlten Detektorwärmeabschirmung 20 auf die gleiche Temperatur wie der Detektor 16 gekühlt.

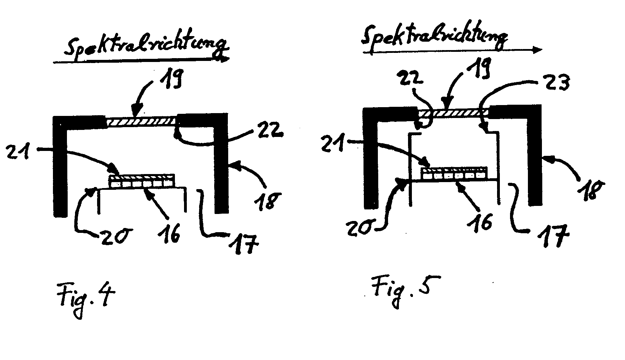

Fig. 4 zeigt eine weitere Ausführungsform in einer Schnittdarstellung ähnlich Fig. 2. Allerdings ist hier das Filtermittel 21 direkt auf dem Detektor 16 aufgebracht. Hierdurch kann die Montage und Kühlung eines zusätzlichen Substrates als Träger für das Filtermittel 21 entfallen. Ferner werden hiermit Abbildungsfehler und Streulicht reduziert.

Fig. 5 zeigt eine weitere Ausführungsform ähnlich der von Fig. 3 mit der weiteren gekühlten Apertur 23. Allerdings ist nun auch hier - vergleichbar zu Fig. 4 - das Filtermittel direkt auf den Detektor 16 aufgebracht.

Nachfolgend wird die Funktionsweise der Detektoranordnung anhand der Figuren 1 und 2 näher erläutert:
Das Licht tritt über den Eingangsschlitz 12 in das optische System 11 der Detektoranordnung 10 ein. Innerhalb des optischen Systems 11 trifft das Licht zunächst auf den Kollimator 13. Mittels des Kollimators 13 wird das Licht auf ein Beugungsgitter 14 gelenkt. Das Licht wird mittels des Beugungsgitters 14 in seine spektralen Bestandteile aufgespaltet. Das spektral aufgefächerte Licht verlässt das Beugungsgitter 14 und trifft auf den fokussierenden Spiegel 15. Vom Spiegel 15 wird das in seine spektralen Bestandteile aufgefächerte Licht in Richtung des Detektors 16 umgelenkt. Zunächst passiert das spektral aufgefächerte Licht jedoch das Fenster 19.

Das Fenster 19 ist in eine Wand des Vakuumgefäßes 18 eingelassen. Durch das Vakuumgefäß 18 kann der evakuierte Bereich 17 auf ein minimal notwendiges Maß reduziert werden. So ist das gesamte optische System 11 außerhalb des Vakuumgefäßes 18 angeordnet und damit besonders leicht zugänglich.

Nach dem Passieren des Fensters 19 trifft das spektral aufgefächerte Licht auf das Filtermittel 21. Hier handelt es sich bei dem Filtermittel 21 um einen Verlaufsfilter, dessen Filtereigenschaften sich in Abhängigkeit von den auftreffenden Wellenlängen über die räumliche Ausdehnung des Filtermittels 21 in spektraler Richtung kontinuierlich verändern. Je nach auftreffender Wellenlänge und abhängig von der Stelle des Filtermittels 21, auf die das Licht trifft, wird die jeweilige Wellenlänge ungehindert durchgelassen. Der Anteil des Lichtes mit einer außerhalb des Filterbereichs liegenden Wellenlänge sowie die dazugehörige Hintergrundstrahlung werden jedoch deutlich vermindert. Somit kann der Anteil der störenden Infrarotstrahlung je nach Wellenlänge um einen Faktor von etwa 10 bis 20 reduziert werden. Das Signal-zu-Rauschverhältnis wird deutlich erhöht.

Das Filtermittel 21 ist auf einem Substrat aufgebracht, welches wiederum mit der gekühlten Detektorwärmeabschirmung 20 verbunden ist. Der Detektor 16 ist innerhalb der Detektorwärmeabschirmung 20 angeordnet und mit dieser verbunden, so dass der Detektor 16, die Detektorwärmeabschirmung 20 und das Filtermittel 21 auf die gleiche Temperatur gekühlt sind. Daher trifft außer der spektral aufgefächerten und mittels des Filtermittels 21 gefilterten Strahlung keine zusätzliche störende Wärmestrahlung auf den Detektor 16.

Zudem kann aufgrund dieser Anordnung auf überraschend einfache Weise auf eine Kühlung des optischen Systems 11 zumindest teilweise oder sogar ganz verzichtet werden. Die vom optischen System 11 ausgehende Wärmestrahlung wird mittels des gekühlten Filtermittels 21 ausgefiltert und kann somit das Messergebnis ebenfalls nicht stören oder verfälschen.

### Bezugszeichenliste:

- 10: Detektoranordnung
- 11: Optisches System
- 12: Eingangsschlitz
- 13: Kollimator
- 14: Beugungsgitter
- 15: Fokussierender Spiegel
- 16: Detektor
- 17: Evakuierter Bereich
- 18: Vakuumgefäß
- 19: Fenster
- 20: Detektorwärmeabschirmung
- 21: Filtermittel
- 22: Apertur
- 23: Apertur

## Patentansprüche

1. Verfahren zum Darstellen eines Spektrums mit einer Detektoranordnung (10) zum Detektieren von Infrarotstrahlung, wobei in einem evakuierten Bereich (17) eine Apertur (22) angeordnet wird, ein gekühlter Detektor (16) innerhalb des evakuierten Bereichs (17) der Apertur (22) zugewandt angeordnet wird, eine Detektorwärmeabschirmung (20) gekühlt wird, ein Filtermittel (21) innerhalb des evakuierten Bereichs (17) angeordnet wird und vom Detektor (16) abgewandt vor der Apertur (22) ein dispersives oder beugendes optisches System (11) zum Erzeugen eines Spektrums angeordnet wird, **dadurch gekennzeichnet, dass** das Filtermittel (21) auf die Temperatur des Detektors (16) gekühlt wird und dass mittels des gekühlten Filtermittels (21) der Detektor (16) vor unerwünschter Hintergrundstrahlung abgeschirmt wird.

2. Verfahren nach Anspruch 1, **dadurch gekennzeichnet, dass** als optisches System (11) ein nicht abbildendes optisches System (11) oder ein abbildendes optisches System (11) verwendet wird, und dass vorzugsweise das optische System (11) nicht oder nur geringfügig gekühlt wird.

3. Verfahren nach einem der Ansprüche 1 oder 2, **dadurch gekennzeichnet, dass** als gekühltes Filtermittel (21) ein Verlaufsfilter und/oder ein Stufenfilter eingesetzt wird, wobei Filtereigenschaften in Abhängigkeit von der geometrischen Position auf dem Filter beim Verlaufsfilter kontinuierlich und beim Stufenfilter stufenweise in Spektralrichtung verändert werden, dass vorzugsweise als Verlaufsfilter oder Stufenfilter ein Bandpassfilter oder ein Kantenfilter verwendet wird, wobei insbesondere der Bandpassfilter als Interferenzfilter oder dichroischer Filter ausgeführt oder aus einem Hochpassfilter und einem Tiefpassfilter hergestellt wird.

4. Verfahren nach einem der vorhergehenden Ansprüche, **dadurch gekennzeichnet, dass** der evakuierte Bereich (17) durch ein Vakuumgefäß (18) begrenzt wird, dass vorzugsweise in einer Wand des Vakuumgefäßes (18) ein Fenster (19) angeordnet wird und dass das optische System (11) vom Detektor (16) abgewandt vor dem Fenster (19) angeordnet wird.

5. Verfahren nach einem der vorhergehenden Ansprüche, **dadurch gekennzeichnet, dass** als Detektor (16) ein Mehrkanal-Zeilen-Detektor oder ein 2-Dimensionaler-Mehrkanal-Detektor verwendet wird, und dass vorzugsweise als optisches System (11) ein Spektrometer, insbesondere ein Prismenspektrometer oder ein Gitterspektrometer, oder ein hyperspektraler Imager oder Pushbroom-/Whiskbroom-Spektrometer verwendet wird.

6. Verfahren nach einem der vorhergehenden Ansprüche, **dadurch gekennzeichnet, dass** die Detektoranordnung (10) im Bereich des nahen Infrarot (SWIR: short wavelength infrared), insbesondere für Detektorempfindlichkeiten größer 1,6 µm, eingesetzt wird.

7. Detektoranordnung zum Einsatz im Infrarotbereich mit einem evakuierten Bereich (17), einer Apertur (22), einem innerhalb des evakuierten Bereichs (17) angeordneten und der Apertur (22) zugewandten gekühlten Detektor (16), einer gekühlten Detektorwärmeabschirmung (20), einem innerhalb des evakuierten Bereichs (17) angeordneten Filtermittels (21), einem vom Detektor (16) abgewandt vor der Apertur (22) angeordneten dispersiven oder beugenden optischen System (11) zum Erzeugen eines Spektrums, **dadurch gekennzeichnet, dass** das Filtermittel (21) auf die Temperatur des Detektors (16) gekühlt ist und dass das Filtermittel (21) ein Verlaufsfilter und/oder ein Stufenfilter mit abhängig von der geometrischen Position auf dem Filter beim Verlaufsfilter kontinuierlich und beim Stufenfilter stufenweise variierenden Filtereigenschaften ist.

8. Detektoranordnung nach Anspruch 7, **dadurch gekennzeichnet, dass** das optische System (11) ein nicht abbildendes optisches System (11) oder ein abbildendes optisches System (11) ist, und dass vorzugsweise das optische System (11) ein ungekühltes oder nur geringfügig gekühltes optisches System (11) ist.

9. Detektoranordnung nach einem der Ansprüche 7 oder 8, **dadurch gekennzeichnet, dass** als Verlaufsfilter oder Stufenfilter ein Bandpassfilter oder ein Kantenfilter vorgesehen ist, wobei insbesondere der Bandpassfilter als ein Interferenzfilter oder ein dichroischer Filter ausgeführt ist oder aus einem Hochpassfilter und einem Tiefpassfilter besteht.

10. Detektoranordnung nach einem der Ansprüche 7 bis 9, **dadurch gekennzeichnet, dass** als Detektor (16) ein Mehrkanal-Zeilen-Detektor oder ein 2-Dimensionaler-Mehrkanal-Detektor vorgesehen ist, und dass vorzugsweise als optisches System (11) ein Spektrometer, insbesondere ein Prismenspektrometer oder ein Gitterspektrometer, oder ein hyperspektraler Imager oder Pushbroom-/Whiskbroom-Spektrometer vorgesehen ist.

11. Detektoranordnung nach einem der Ansprüche 7 bis 10, **dadurch gekennzeichnet, dass** das Filtermittel (21) auf ein Substrat oder auf eine innerhalb des Vakuumgefäßes (18) vorgesehene Linse oder direkt auf den Detektor (16) aufgebracht, insbesondere aufgedampft, ist, wobei vorzugsweise das Filtermittel (21) zum Kühlen mit der Detektorwärmeabschirmung (20) verbunden ist oder eine separate Kühlung für das Filtermittel (21) vorgesehen ist.

12. Detektoranordnung nach einem der Ansprüche 7 bis 11, **dadurch gekennzeichnet, dass** der evakuierte Bereich (17) durch ein Vakuumgefäß (18) begrenzt ist, dass vorzugsweise in einer Wand des Vakuumgefäßes (18) ein Fenster (19) angeordnet ist und das optische System (11) vom Detektor (16) abgewandt vor dem Fenster (19) angeordnet ist, wobei insbesondere die Apertur (22) am Fenster (19) angeordnet ist, dass vorzugsweise eine weitere Apertur (23) innerhalb des evakuierten Bereiches (17) angeordnet und auf die Temperatur des Detektors (16) gekühlt ist, wobei insbesondere die weitere Apertur (23) zum Kühlen mit der Detektorwärmeabschirmung (20) verbunden ist oder eine separate Kühlung für die weitere Apertur (23) vorgesehen ist, wobei insbesondere die Apertur (23) die begrenzende Apertur ist.

13. Detektoranordnung nach einem der Ansprüche 7 bis 12, **dadurch gekennzeichnet, dass** die Detektoranordnung (10) als abbildendes Spektrometer, ein abbildender hyperspektraler Imager oder Pushbroom-/Whiskbroom-Spektrometer ausgebildet ist, und dass die Detektoranordnung (10) vorzugsweise im Bereich des nahen Infrarot (SWIR: short wavelength infrared), insbesondere für Detektorempfindlichkeiten größer 1,6 µm, einsetzbar ist.

14. Verwendung des Verfahrens nach einem der Ansprüche 1 bis 6 in einem und/oder einer Detektoranordnung nach einem der Ansprüche 7 bis 13 als ein, insbesondere abbildendes, Spektrometer oder als ein, insbesondere abbildender, hyperspektraler Imager oder Pushbroom-/Whiskbroom-Spektrometer.
